# EUROPEAN PATENT APPLICATION

(11) **EP 4 819 305 A1**
(43) Date of publication of application: **07.10.2026**
(21) Application number: 24936753.3
(22) Date of filing: 06.12.2024
(51) Int. Cl.: H01M 10/6556, H01M 10/6568, H01M 10/625

(54) **BATTERY DEVICE AND ELECTRIC DEVICE**

(30) Priority: 24.04.2024 CN 202420869133 U; 24.04.2024 CN 202410501046
(71) Applicant: Contemporary Amperex Technology Co., Limited, Ningde, Fujian 352100 (CN)
(72) Inventor: ZHOU, Cong, Ningde, Fujian 352100 (CN)
(74) Representative: Kraus & Lederer PartGmbB
(86) International application number: PCT/CN2024/137539
(87) International publication number: WO 2025/222861

(57) **Abstract**

A battery device (100) and an electric device. The battery device comprises: a case (10); a battery cell assembly (20) accommodated in the case; and a heat exchange assembly (30) accommodated in the case. The heat exchange assembly comprises: a heat exchange main body (31) comprising a plurality of heat exchange flow channels (301); and current collecting structures (32) arranged at two ends of the heat exchange main body, each current collecting structure comprising a blocking member (321), a current collecting member (322) and an adapter member (323), wherein the blocking member blocks at least one heat exchange flow channel, the current collecting member is provided with a current collecting cavity (3221), the current collecting member is in sealing fit with and connected to the heat exchange main body by means of the adapter member, the current collecting member is provided with a communication port (322a) communicated with the current collecting cavity, the communication port can be used for allowing the entry/exit of a heat exchange medium, and the adapter member is formed on the heat exchange main body and the current collecting member.

## Description

### CROSS-REFERENCE TO RELATED APPLICATIONS

The present application is based on and claims priority to Chinese Patent Application No. 202420869133.1, filed on April 24, 2024, and Chinese Patent Application No. 202410501046.5, filed on April 24, 2024, the entire contents of which are incorporated herein by reference.

### TECHNICAL FIELD

The present application relates to the technical field of batteries, and in particular, to a battery device and an electric device.

### BACKGROUND

In recent years, new energy vehicles have been developed with a great leap. In the field of electric vehicles, battery devices play an irreplaceably important role as a power source of the electric vehicle. A battery device is composed of a case and a plurality of battery cells accommodated in the case. The battery cells in the battery device generate a large amount of heat during repeated charging and discharging cycles. A heat exchange assembly is usually disposed inside the battery device for heat exchange to regulate the internal temperature of the battery device. However, the reliability of the heat exchange assembly largely affects the reliability of the battery device. Therefore, further improving the reliability of the battery device has become one of the urgent problems to be solved at present.

### SUMMARY

Embodiments of the present application provide a battery device and an electric device. The reliability of a heat exchange assembly can be effectively improved, such that the reliability of the battery device and the electric device can be improved.

In a first aspect, embodiments of the present application provide a battery device, including: a case; a battery cell assembly accommodated in the case; and a heat exchange assembly accommodated in the case to exchange heat with the battery cell assembly, where the heat exchange assembly includes: a heat exchange main body including a plurality of heat exchange flow channels extending in a first direction; and current collecting structures disposed at two ends of the heat exchange main body in the first direction, where each of the current collecting structures includes a blocking member, a current collecting member, and an adapter member, the blocking member blocks at least one of the heat exchange flow channels, the current collecting member is provided with a current collecting cavity, the current collecting member is in sealing fit with and connected to the heat exchange main body by means of the adapter member such that the current collecting cavity is in communication with the heat exchange flow channel, the current collecting member is provided with a communication port in communication with the current collecting cavity, the communication port is configured to allow entry/exit of a heat exchange medium such that the heat exchange medium flows between the current collecting cavity and the heat exchange flow channel, and the adapter member is formed on the heat exchange main body and the current collecting member.

In the above technical solution, by configuring the heat exchange assembly to include the heat exchange main body and the current collecting structures, and each current collecting structure to include the blocking member, the current collecting member, and the adapter member, when the heat exchange main body is connected to the current collecting structure, the heat exchange main body, the blocking member, and the current collecting member can be assembled and positioned first, and then the heat exchange main body and the current collecting member are connected together by forming the adapter member on the heat exchange main body and the current collecting member, such that the current collecting member can be not directly connected to the heat exchange main body, and the adapter member can be relatively easily adapted to the size, shape or flatness requirements of the heat exchange main body and the current collecting member during formation, thereby reducing the mounting difficulty among the heat exchange main body, the current collecting member, and the adapter member, making the connection among the heat exchange main body, the current collecting member, and the adapter member tighter and more reliable, reducing the risk of leakage caused by the unreliable connection of the heat exchange assembly, improving the overall reliability of the heat exchange assembly, and further improving the reliability of the battery device.

In some embodiments of the present application, at least one of the heat exchange main body and the current collecting member is provided with a recessed portion, and part of the adapter member is formed in the recessed portion.

In the above technical solution, part of the formed adapter member can be embedded in the recessed portion, which can increase the bonding surface between the adapter member and the heat exchange main body and/or the current collecting member, thereby making the connection between the adapter member and the heat exchange main body and/or the current collecting member tighter, reducing the risk of loosening of the heat exchange assembly due to factors such as vibration and fluid impact during operation or use, helping to enhance the connection stability and improve the reliable operation of the heat exchange assembly, and further improving the reliability of the battery device.

In some embodiments of the present application, the recessed portion extends and opens in a direction close to the adapter member.

In the above technical solution, compared with a recessed portion of a non-annular structure, the recessed portion of an annular structure can provide omnidirectional support for the adapter member, and can better fix the adapter member, thereby reducing the risk of displacement of the adapter member in all directions, and improving the positional reliability of the adapter member on the heat exchange main body and/or the current collecting member. With the above structure, the bonding surface between the adapter member and the heat exchange main body and/or the current collecting member can be made as large as possible, which allows for a tighter connection, achieves a better effect in enhancing connection stability, and enables the formed adapter member to be formed into a structure similar to a sealing ring, thereby reducing the risk of leakage, and improving the reliability of the heat exchange assembly.

In some embodiments of the present application, the recessed portion is open toward the other of the heat exchange main body and the current collecting member.

In the above technical solution, with the above structure, during formation of the adapter member, a material for forming the adapter member can smoothly enter the recessed portion along an open position of the recessed portion, which helps to reduce the forming difficulty of the adapter member and improve the forming quality. With the above structure, after the adapter member is formed, the thickness at the transition position between a portion of the adapter member located between the heat exchange main body and the current collecting member and a portion thereof located in the recessed portion can be made relatively large, which can improve the overall strength of the adapter member, thereby facilitating the improvement of the connection reliability among the heat exchange main body, the current collecting member, and the adapter member.

In some embodiments of the present application, a thickness of a portion of the adapter member located in the recessed portion is equal to a depth of the recessed portion.

In the above technical solution, the surface of the adapter member can be flush with the surface of the heat exchange main body and/or the current collecting member provided with the recessed portion, which helps to make the connection between the adapter member and the heat exchange main body tighter without a gap, and/or the connection between the adapter member and the current collecting member tighter without a gap. Such tight connection helps to improve the sealing performance of the heat exchange assembly and reduce the risk of leakage at the connection position. With the above structure, the heat exchange assembly can have a neater appearance without significant protrusions, which can save materials and the internal space of the case, thereby facilitating the mounting of other electrical components inside the case.

In some embodiments of the present application, an end of the current collecting member close to the heat exchange main body is open and forms an opening in communication with the current collecting cavity, a supporting portion is disposed in the opening, and the supporting portion is connected to at least two opposite ends of the opening.

In the above technical solution, during formation of the adapter member on the current collecting member, the supporting portion can support the current collecting member within the opening, which reduces the risk of deformation of the current collecting member caused by the material for forming the adapter member pressing against the current collecting member, improves the reliability of the current collecting member, and further improves the reliability of the heat exchange assembly.

In some embodiments of the present application, a size of the current collecting member in a second direction is smaller than a size of the current collecting member in a third direction, the third direction, the second direction, and the first direction are perpendicular to one another, and the supporting portion is connected to two ends of the opening in the second direction.

In the above technical solution, the current collecting member is of an elongated structure, and the second direction may refer to the width direction of the opening, such that the supporting portion supports two ends of the current collecting cavity in the width direction. In this solution, the supporting portion has a relatively small size and relatively high strength, which can provide greater support strength for the current collecting member and help to further improve the reliability of the current collecting member. The supporting portion with a relatively small size can also reduce the resistance to the heat exchange medium, which helps the heat exchange medium to flow more smoothly between the current collecting cavity and the heat exchange flow channel, improves the heat exchange stability of the heat exchange assembly, and further improves the reliability of the battery device.

In some embodiments of the present application, the blocking member includes a blocking portion and a limiting portion that are connected, where the blocking portion is disposed in the heat exchange flow channel, and the limiting portion and an end of the heat exchange main body close to the current collecting member abut against each other.

In the above technical solution, after the blocking portion is mounted in the heat exchange flow channel, the limiting portion can be in abutting fit with the end of the heat exchange main body close to the current collecting member to fix the position of the blocking portion in the heat exchange flow channel, thereby reducing the risk that the blocking portion continues to displace toward the heat exchange flow channel under the action of the material for forming the adapter member during formation of the adapter member on the heat exchange main body, improving the reliability of the blocking portion in the heat exchange flow channel, and further improving the reliability of the heat exchange assembly.

In some embodiments of the present application, the limiting portion matches in shape the end of the heat exchange main body close to the current collecting member, and a position of the limiting portion corresponding to the heat exchange flow channel is provided with a clearance hole.

In the above technical solution, the limiting portion matches in shape the end of the current collecting member, which facilitates accurate alignment therebetween during mounting, reduces the risk of mounting errors in the mounting process, lowers the assembly difficulty, and improves the assembly efficiency. With the above structure, the limiting portion can also fit tightly with the current collecting member, thereby reducing the risk of displacement of the blocking portion under the action of vibration, fluid impact, or other external forces, and improving the reliability of the heat exchange assembly. With the above solution, the limiting portion can also be formed into an annular structure, which can form an annular seal in the circumferential direction between the heat exchange main body and the adapter member, thereby reducing the risk of a gap between the heat exchange main body and the adapter member. Thus, the sealing performance can be improved, and the reliability of the heat exchange assembly can also be improved.

In some embodiments of the present application, the limiting portion is configured as a limiting plate, and on a reference plane perpendicular to the first direction, an orthographic projection of an edge contour of the limiting portion on the reference plane is located within an orthographic projection of a flow channel wall of the heat exchange flow channel provided with the blocking portion.

In the above technical solution, the limiting portion is a plate member with a relatively small size, which can reduce material consumption and costs while providing a good limiting effect. In addition, since the limiting portion has a relatively small size, the entire blocking member is also convenient to manufacture, which can reduce manufacturing costs. With the above solution, the weight can also be reduced, thereby reducing the overall weight of the heat exchange assembly, and helping to increase the energy density of the battery device.

In some embodiments of the present application, the blocking member includes the blocking portion, where the blocking portion is disposed in the heat exchange flow channel, a gap is formed between at least one side of the blocking portion in the first direction and an inner wall of the heat exchange flow channel, and the gap is configured to accommodate flash during formation of the adapter member.

In the above technical solution, the gap is configured to accommodate the flash during formation of the adapter member, such that during formation of the adapter member, the probability that the uneven surface of the heat exchange main body results in a poor fit with battery cells and consequently affects the heat exchange efficiency can be reduced, the probability that the heat exchange main body is damaged due to excessive local stress induced by the uneven surface can also be reduced, and the reliability of the heat exchange assembly can be improved. The gap is formed between the blocking portion and the inner wall of the heat exchange flow channel, such that the blocking portion can be more easily mounted in the heat exchange flow channel, thereby reducing the mounting difficulty. On this basis, during formation of the adapter member on the heat exchange main body, the material for forming the adapter member can enter the gap and provide a seal between the blocking portion and the heat exchange flow channel, thereby improving the blocking effect of the blocking portion on the heat exchange flow channel, helping to keep the heat exchange performance of the heat exchange assembly stable, and improving the reliability of the heat exchange assembly.

In some embodiments of the present application, a size of the heat exchange main body in the second direction is smaller than the size of the current collecting member in the third direction, the third direction, the second direction, and the first direction are perpendicular to one another, two ends of the blocking portion in the second direction abut against the inner wall of the heat exchange flow channel, and the gap is formed between at least one end of the blocking portion in the third direction and the inner wall of the heat exchange flow channel.

In the above technical solution, the heat exchange main body may be formed into a thin plate-like structure, making it easier to fit against the surface of the battery cell assembly for heat exchange. This helps to save the internal space of the case, provides a larger arrangement space for the battery cell assembly, and increases the energy density of the battery device. It also provides a larger arrangement space for other electrical components, which facilitates the mounting of the electrical components inside the case, and is beneficial to maintenance and inspection. With the above structure, on the premise that the gap is formed between the blocking portion and the inner wall of the heat exchange flow channel, the blocking portion can provide support in a large-area region of the heat exchange main body to achieve a better supporting effect, such that the probability of large deformation of the heat exchange main body is reduced, and the risk of damage to the heat exchange main body is lowered, thereby lowering the risk of deteriorated heat exchange efficiency resulting from the reduced cross section of the heat exchange flow channel, improving the heat exchange reliability of the heat exchange main body, providing a more stable working environment for the battery cell assembly, and improving the reliability of the battery device.

In some embodiments of the present application, the blocking portion has a circumferential surface disposed around the first direction, the circumferential surface is provided with an accommodating groove, and the accommodating groove is in communication with the gap and is configured to accommodate the flash during formation of the adapter member.

In the above technical solution, the accommodating groove is in communication with the gap and may be further configured to accommodate the flash during formation of the adapter member, and the accommodating groove and the gap can jointly accommodate more flash, which can further reduce the probability that the flash overflows onto the surface of the heat exchange main body and/or the current collecting member when the adapter member is formed, and further reduce the probability that the surface of the heat exchange main body and/or the current collecting member has poor flatness, thereby further improving the heat exchange effect of the heat exchange assembly on the battery cell assembly, and improving the reliability of the battery device.

In some embodiments of the present application, the accommodating groove is of an annular structure disposed circumferentially around the first direction.

In the above technical solution, during formation of the adapter member on the heat exchange main body, the flash can enter the accommodating groove through the gap. Since the accommodating groove is of the annular structure, the flash can form a seal between the circumferential surface of the blocking portion and the inner wall of the heat exchange flow channel, which can improve the blocking and sealing effects of the blocking portion on the heat exchange flow channel on the one hand, and can reduce the problem that the adapter member cannot be well formed due to the flash entering the heat exchange flow channel where the blocking portion is located on the other hand, thereby improving the forming reliability of the adapter member, and further improving the reliability of the heat exchange assembly and the reliability of the battery device.

In some embodiments of the present application, the heat exchange main body includes a shell and a plurality of partition plates, where two ends of the shell in the first direction are open, a size of the shell in the second direction is smaller than a size of the shell in the third direction, the third direction, the second direction, and the first direction are perpendicular to one another, the plurality of partition plates are disposed in the shell, the partition plates are disposed obliquely relative to the second direction, and the heat exchange flow channels are respectively formed between each of the partition plates and a shell wall of the shell and between any two adjacent ones of the partition plates.

In the above technical solution, by configuring the heat exchange main body to include the shell and the partition plates, the heat exchange main body as a whole may be formed into a thin shell-like structure, and has a relatively small size while providing a relatively good heat exchange effect, which can save the internal space of the case. The partition plates can also form diagonal ribs inside the shell, which can improve the overall strength of the heat exchange main body, reduce the risk of large deformation of the shell, improve the reliability of the heat exchange main body, and further improve the reliability of the battery device.

In some embodiments of the present application, on a section plane perpendicular to the first direction, a cross-sectional shape of the heat exchange flow channel is the same as a cross-sectional shape of the blocking member.

In the above technical solution, the cross-sectional shapes of the heat exchange flow channel and the blocking member are the same, such that the blocking member can fit well against the inner wall of the heat exchange flow channel, which is beneficial to the sealing of the blocking member in the heat exchange flow channel, can reduce the risk of a gap and make the blocking member uniformly bear the pressure in all directions in the heat exchange flow channel, and helps to maintain the seal between the blocking member and the inner wall of the heat exchange flow channel. Since the cross-sectional shapes of the heat exchange flow channel and the blocking member are the same, the blocking member can also provide support inside the heat exchange flow channel, which reduces the risk of large deformation of the heat exchange main body due to stress, is beneficial to reducing the risk of a reduced flow cross-section of the heat exchange flow channel, and can improve the heat exchange reliability of the heat exchange main body.

In some embodiments of the present application, the adapter member is injection-molded onto the heat exchange main body and the current collecting member.

In the above technical solution, the adapter member is injection-molded onto the heat exchange main body and the current collecting member, such that the adapter member can be formed at a relatively high speed and is suitable for large-scale automated production, thereby improving the production efficiency. In this way, the adapter member can also have high size accuracy and high surface quality, which can improve the forming quality of the adapter member, improve the connection reliability among the heat exchange main body, the adapter member, and the current collecting member, and further improve the reliability of the battery device.

In some embodiments of the present application, the heat exchange main body is a metallic member or a non-metallic member; and/or the current collecting member is a metallic member or a non-metallic member. In this technical solution, the heat exchange main body may be a metallic member with better thermal conductivity, which helps to improve the heat exchange efficiency; and the heat exchange main body may also be a non-metallic member, thereby reducing costs while meeting the thermal conductivity requirements. If the current collecting member is a metallic member, it has high rigidity and strength, thereby reducing the risk of damage; and if the current collecting member is a non-metallic member, it can reduce costs while meeting the rigidity and strength requirements. By forming the heat exchange main body and the current collecting member from the above materials, more options are available, providing greater flexibility.

In a second aspect, embodiments of the present application provide an electric device, including the battery device according to any one of the foregoing, where the battery device is configured to store or supply electric energy.

In the above technical solution, since the battery device has relatively high reliability, the use of the battery device to store or supply electric energy can improve the power supply reliability and further improve the operational reliability of the electric device.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of an electric device as a vehicle according to some embodiment of the present application;
FIG. 2 is an exploded structural view of a battery device according to some embodiments of the present application;
FIG. 3 is a schematic diagram of a partial three-dimensional structure of a battery device according to some embodiments of the present application;
FIG. 4 is a schematic diagram of a three-dimensional structure of a heat exchange assembly according to some embodiments of the present application;
FIG. 5 is a first schematic diagram of a partial internal structure of a heat exchange assembly according to some embodiments of the present application;
FIG. 6 is an exploded view of a current collecting structure according to some embodiments of the present application;
FIG. 7 is a second schematic diagram of a partial internal structure of a heat exchange assembly according to some embodiments of the present application;
FIG. 8 is a schematic assembly diagram of a heat exchange main body, a blocking member, and an adapter member according to some embodiments of the present application;
FIG. 9 is a schematic diagram of a three-dimensional structure of a blocking member and an adapter member according to some embodiments of the present application;
FIG. 10 is a schematic assembly diagram of a heat exchange main body and an adapter member according to some embodiments of the present application;
FIG. 11 is a schematic assembly diagram of a heat exchange main body and a blocking portion according to some embodiments of the present application;
FIG. 12 is a schematic structural diagram of a blocking member according to some embodiments of the present application; and
FIG. 13 is a schematic diagram of a partial internal structure of a heat exchange main body according to some embodiments of the present application.

### Reference number:

1000: electric device;
   100: battery device;
   10: case; 11: first case body; 12: second case body;
   20: battery cell assembly; 21: battery cell;
   30: heat exchange assembly;
      31: heat exchange main body;
         301: heat exchange flow channel; 3011: flow channel wall;
         311: shell;
         312: partition plate;
      32: current collecting structure;
         321: blocking member; 3211: blocking portion; 3211a: circumferential surface; 3211b: accommodating groove; 3212: limiting portion; 3212a: clearance hole; 3212b: edge contour;
         322: current collecting member; 3221: current collecting cavity; 3222: supporting portion; 322a: communication port; 322b: recessed portion; 322c: opening;
         323: adapter member;
         324: gap;
200: controller; 300: motor; X: first direction; Y: second direction; and Z: third direction.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, the battery cell may include a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, and the like, which are not limited in the embodiments of the present application. The battery cell may be in the shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

The battery device mentioned in the embodiments of the present application may include one or more battery cell assemblies for providing voltage and capacity. The battery cell assembly may include a plurality of battery cells that are connected in series, in parallel, or in series-parallel by means of a busbar component. In some embodiments, the battery cell assembly is usually formed by arranging a plurality of battery cells.

As an example, the battery cell assembly may be a battery module, which is an independent module formed by arranging and fixing a plurality of battery cells. As an example, the battery module may be formed by bundling a plurality of battery cells with a cable tie.

In some embodiments, the battery device may be a battery pack. The battery pack includes a case and one or more battery cell assemblies, where the battery cell assemblies are accommodated in the case. As an example, the battery cell assembly may be a battery module, and the battery cell assembly may be accommodated in the case by fixing the battery module in the case. As an example, the battery cell assembly may alternatively be accommodated in the case by directly fixing the plurality of battery cells in the case. The case can prevent liquids or other foreign objects from affecting the charging or discharging of the battery cells.

The battery cell includes a housing, an electrode assembly, and an electrolyte, where the housing is configured to accommodate the electrode assembly and the electrolyte. The electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. A surface of the positive electrode current collector is coated with the positive electrode active material layer. A portion of the positive electrode current collector that is not coated with the positive electrode active material layer protrudes from a portion of the positive electrode current collector that is coated with the positive electrode active material layer, and the portion of the positive electrode current collector that is not coated with the positive electrode active material layer is used as a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. A surface of the negative electrode current collector is coated with the negative electrode active material layer. A portion of the negative electrode current collector that is not coated with the negative electrode active material layer protrudes from a portion of the negative electrode current collector that is coated with the negative electrode active material layer, and the portion of the negative electrode current collector that is not coated with the negative electrode active material layer is used as a negative electrode tab. The negative electrode current collector may be made of copper, and the negative electrode active material may be carbon, silicon, or the like. To ensure that a high current passes through without any fusing, a plurality of positive electrode tabs are provided and stacked together, and a plurality of negative electrode tabs are provided and stacked together.

The separator may be made of polypropylene (PP), polyethylene (PE), or the like. In addition, the electrode assembly may be a wound structure or a stacked structure, and the embodiments of the present application are not limited thereto.

In recent years, new energy vehicles have been developed with a great leap. In the field of electric vehicles, battery devicees play an irreplaceably important role as a power source of the electric vehicle. A battery device is composed of a case and a plurality of battery cells accommodated in the case. The battery cells in the battery device generate a large amount of heat during repeated charging and discharging cycles. A heat exchange assembly is usually disposed inside the battery device for heat exchange to regulate the internal temperature of the battery device. However, the reliability of the heat exchange assembly largely affects the reliability of the battery device. Therefore, further improving the reliability of the battery device has become one of the urgent problems to be solved at present.

In a general battery device, a cold plate is usually disposed inside the case to exchange heat with a battery cell assembly, and the cold plate is connected to a tube for a heat exchange medium to enter and exit via a current collecting member. The cold plate and the current collecting member are two separate metal components connected by a brazing process. However, the size and surface flatness of the cold plate are relatively difficult to control, resulting in poor fit between the cold plate and the current collecting member. This affects the welding quality during brazing, leading to a high risk of leakage between the cold plate and the current collecting member, and compromising the heat exchange reliability of the cold plate. Furthermore, the leaked heat exchange medium, once entering the interior of the case, can easily cause electrical safety hazards such as short circuits, thereby affecting the overall reliability of the battery device.

Based on the above considerations, to solve the problem that the reliability of the battery device is affected due to the reliability issue of the heat exchange assembly during mounting, the applicant designs a battery device, including: a case, a battery cell assembly, and a heat exchange assembly, where the battery cell assembly is accommodated in the case; the heat exchange assembly is accommodated in the case to exchange heat with the battery cell assembly; and the heat exchange assembly includes a heat exchange main body and current collecting structures, where the heat exchange main body includes a plurality of heat exchange flow channels extending in a first direction; and the current collecting structures are disposed at two ends of the heat exchange main body in the first direction, and each current collecting structure includes a blocking member, a current collecting member, and an adapter member, where the blocking member blocks at least one heat exchange flow channel, the current collecting member is provided with a current collecting cavity, the current collecting member is in sealing fit with and connected to the heat exchange main body by means of the adapter member such that the current collecting cavity is in communication with the heat exchange flow channel, the current collecting member is provided with a communication port in communication with the current collecting cavity, the communication port is configured to allow entry/exit of a heat exchange medium such that the heat exchange medium flows between the current collecting cavity and the heat exchange flow channel, and the adapter member is formed on the heat exchange main body and the current collecting member.

In the battery device of this structure, by configuring the heat exchange assembly to include the heat exchange main body and the current collecting structures, and each current collecting structure to include the blocking member, the current collecting member, and the adapter member, when the heat exchange main body is connected to the current collecting structure, the heat exchange main body, the blocking member, and the current collecting member can be assembled and positioned first, and then the heat exchange main body and the current collecting member are connected together by forming the adapter member on the heat exchange main body and the current collecting member, such that the current collecting member can be not directly connected to the heat exchange main body, and the adapter member can be relatively easily adapted to the size, shape or flatness requirements of the heat exchange main body and the current collecting member during formation, thereby reducing the mounting difficulty among the heat exchange main body, the current collecting member, and the adapter member, making the connection among the heat exchange main body, the current collecting member, and the adapter member tighter and more reliable, reducing the risk of leakage caused by the unreliable connection of the heat exchange assembly, improving the overall reliability of the heat exchange assembly, and further improving the reliability of the battery device.

The battery device disclosed in the embodiments of the present application may be, but is not limited to being, used in an electric device such as a vehicle, a ship, or an aircraft. A power supply system of the electric device can be composed of the battery device and the like disclosed in the present application.

Embodiments of the present application provide an electric device using a battery device as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

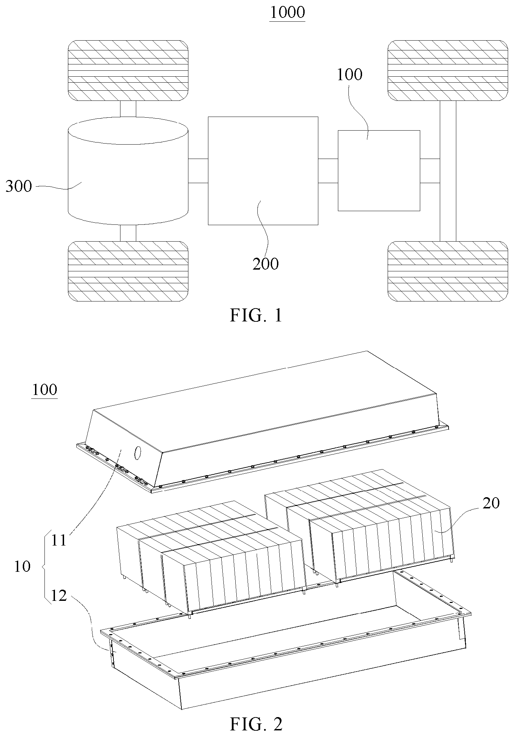

For ease of description, the following embodiments are described by taking, as an example, an electric device 1000 as a vehicle in an embodiment of the present application. Reference is made to FIG. 1. FIG. 1 is a schematic structural diagram of an electric device 1000 as a vehicle according to some embodiments of the present application. The vehicle may be a fuel vehicle, a gas vehicle, or a new energy vehicle, and the new energy vehicle may be a battery electric vehicle, a hybrid vehicle, or a range-extended electric vehicle. Inside the vehicle, a battery device 100 is disposed, which may be disposed at the bottom, head, or tail of the vehicle. The battery device 100 may be used to power the vehicle. For example, the battery device 100 may be used as an operating power source of the vehicle. The vehicle may further include a controller 200 and a motor 300, where the controller 200 is configured to control the battery device 100 to power the motor 300, for example, to meet the working power requirements of the vehicle during starting, navigation, and driving.

In some embodiments of the present application, the battery device 100 may be used not only as an operating power source for the vehicle, but also as a driving power source for the vehicle, instead of or partially instead of fuel or natural gas to provide driving power for the vehicle.

Reference is made to FIG. 2. FIG. 2 is an exploded structural view of a battery device 100 according to some embodiments of the present application. The battery device 100 includes a case 10 and a plurality of battery cells 21. The battery cells 21 are accommodated in the case 10. The case 10 is configured to provide an assembly space for the battery cells 21, and the case 10 may adopt various structures. In some embodiments, the case 10 may include a first case body 11 and a second case body 12, where the first case body 11 and the second case body 12 cover each other, and the first case body 11 and the second case body 12 jointly define the assembly space for accommodating the battery cells 21. The second case body 12 may be of a hollow structure with one open side, and the first case body 11 may be of a plate-like structure. The first case body 11 covers the open side of the second case body 12, such that the first case body 11 and the second case body 12 jointly define the assembly space. Alternatively, the first case body 11 and the second case body 12 each may be of a hollow structure with one open side, and the open side of the first case body 11 covers the open side of the second case body 12. Certainly, the case 10 formed by the first case body 11 and the second case body 12 may be in various shapes, such as a cylinder and a cuboid.

In the battery device 100, a plurality of battery cells 21 may be subjected to series connection, parallel connection, or series-parallel connection. The series-parallel connection means that the plurality of battery cells 21 are subjected to both series connection and parallel connection. The plurality of battery cells 21 may be directly connected in series, in parallel, or in series-parallel, and the whole of the plurality of battery cells 21 is then accommodated in the case 10. Certainly, the battery device 100 may also be formed in a manner that a plurality of battery cells 21 are subjected to series connection, parallel connection, or series-parallel connection to form a plurality of battery modules, and the plurality of battery modules are then subjected to series connection, parallel connection, or series-parallel connection to form an integrated unit, which is accommodated in the case 10. The battery device 100 may further include other structures. For example, the battery device 100 may further include a busbar component for establishing electrical connections between the plurality of battery cells 21.

Reference is made to FIG. 2. FIG. 2 is an exploded structural view of a battery device 100 according to some embodiments of the present application. The battery device 100 includes multiple rows of battery cells 21. The multiple rows of battery cells 21 are arranged in the length direction of the case 10, and each row of battery cells 21 includes a plurality of battery cells 21 arranged in the width direction of the case 10. Alternatively, the multiple rows of battery cells 21 are arranged in the width direction of the case 10, and each row of battery cells 21 includes a plurality of battery cells 21 arranged in the length direction of the case 10.

Each battery cell 21 may be a secondary battery or a primary battery, where the secondary battery refers to a battery cell 21 that may be continuously used by activating an active material by means of charging the battery cell after the battery cell is discharged. The battery cell may also be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, which is not limited in the embodiments of the present application. The battery cell 21 may be in the shape of a cylinder, a flat body, a cuboid, or the like. By way of example, in FIG. 2, the battery cell 21 is in the shape of a cuboid.

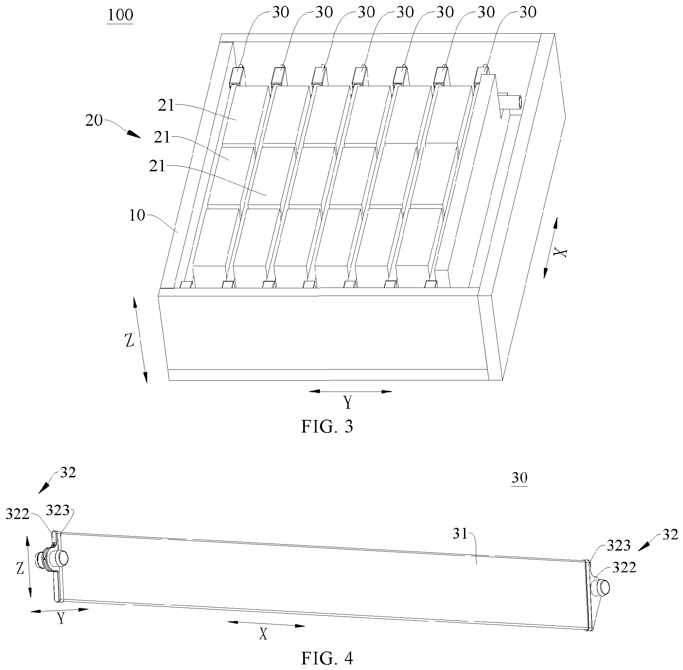

According to some embodiments of the present application, referring to FIG. 3 to FIG. 6, embodiments of the present application provide a battery device 100, including: a case 10, a battery cell assembly 20, and a heat exchange assembly 30. The battery cell assembly 20 is accommodated in the case 10. The heat exchange assembly 30 is accommodated in the case 10 to exchange heat with the battery cell assembly 20. The heat exchange assembly 30 includes a heat exchange main body 31 and current collecting structures 32. The heat exchange main body 31 includes a plurality of heat exchange flow channels 301 extending in a first direction X. The current collecting structures 32 are disposed at two ends of the heat exchange main body 31 in the first direction. Each current collecting structure 32 includes a blocking member 321, a current collecting member 322, and an adapter member 323, where the blocking member 321 blocks at least one heat exchange flow channel 301, the current collecting member 322 is provided with a current collecting cavity 3221, the current collecting member 322 is in sealing fit with and connected to the heat exchange main body 31 by means of the adapter member 323 such that the current collecting cavity 3221 is in communication with the heat exchange flow channel 301, the current collecting member 322 is provided with a communication port 322a in communication with the current collecting cavity 3221, the communication port 322a is configured to allow entry/exit of a heat exchange medium such that the heat exchange medium flows between the current collecting cavity 3221 and the heat exchange flow channel 301, and the adapter member 323 is formed on the heat exchange main body 31 and the current collecting member 322.

The case 10 may refer to an external structure of the battery device 100, and is a component that provides physical protection for electrical components such as the battery cell assembly 20 and the heat exchange assembly 30 inside the battery device 100. The material of the case 10 may include, but is not limited to, metal materials or composite materials, where the metal materials may include, but are not limited to, aluminum alloy or steel, and the composite materials may include, but are not limited to, carbon fiber reinforced composites and glass fiber reinforced composites. The shape of the case 10 may include, but is not limited to, a cuboid, a cube, or a cylinder.

The battery cell assembly 20 may refer to an assembly including one or more battery cells 21. When there are a plurality of battery cells 21, the plurality of battery cells 21 may be, but are not limited to being, connected in series, in parallel, or in series-parallel.

The heat exchange assembly 30 may refer to a structure or a component for regulating the temperature of the battery cell assembly 20 to ensure the normal operation of the battery cell assembly 20. There may be one or more heat exchange assemblies 30, which may be disposed on the surface of one or two battery cells 21 on the outermost side of the battery cell assembly 20, or may be disposed between one or more groups of any two adjacent rows of battery cells 21. By way of example, referring to FIG. 3, the battery cell assembly 20 may include multiple rows of battery cells 21 arranged in a second direction Y, where each row of battery cells 21 includes a plurality of battery cells arranged in the first direction X, and heat exchange assemblies 30 are disposed between any two adjacent rows of battery cells 21 and on the outer sides of two rows of battery cells 21 at two ends in the second direction Y.

It should be noted that the first direction X and the second direction Y described above, and the third direction Z mentioned below may each refer to one of the length direction, the width direction, and the height direction of the heat exchange main body 31, with no specific limitation herein. For example, the first direction X may refer to the length direction of the heat exchange main body 31.

The heat exchange main body 31 may refer to a tubular component or a cavity structural member through which the heat exchange medium can flow. The heat exchange flow channel 301 may refer to a flow channel formed inside the heat exchange main body 31 for circulating the heat exchange medium, and may penetrate the heat exchange main body 31 in the first direction X. The heat exchange main body 31 may be flat, for example, the heat exchange main body 31 may be a flat plate-like component, or a structural member formed by connecting a plurality of heat exchange tubes side by side. The material of the heat exchange main body 31 may include, but is not limited to, metal materials, composite materials, or ceramic materials. The metal materials may include, but are not limited to, aluminum alloy and copper alloy. The composite materials may include, but are not limited to, carbon fiber reinforced composites or graphite-metal composites. The ceramic materials may include, but are not limited to, aluminum nitride ceramic or beryllium oxide ceramic. The heat exchange medium mentioned in the present application may include, but is not limited to, water, ethylene glycol aqueous solution, mineral oil, and silicone oil.

The current collecting structures 32 are disposed at two ends of the heat exchange main body 31 in the first direction X, which may mean that one of the current collecting structures 32 at the two ends in the first direction X may be used for introducing the heat exchange medium and delivering the heat exchange medium into the heat exchange flow channel 301 of the heat exchange main body 31, and the other may be used for outputting the heat exchange medium after heat exchange from the heat exchange flow channel 301 to an external circulation tube.

The blocking member 321 may refer to a component capable of blocking the heat exchange flow channel 301. For ease of understanding, the blocking member 321 may refer to a plug or a stopper, which is partially or fully embedded into the heat exchange flow channel 301 to block the heat exchange flow channel 301. The number of blocking members 321 may be one or more, and a certain number of blocking members 321 may be selected as required to block a corresponding number of heat exchange flow channels 301, where the material of the blocking members 321 may include, but is not limited to, wood, rubber, or plastic. It can be understood that the blocking member 321 can be disposed to close the heat exchange flow channel 301, such that the flow rate of the heat exchange medium flowing through the heat exchange main body 31 is adjusted to regulate the heat exchange capacity of the heat exchange assembly 30. For example, the greater the number of blocked heat exchange flow channels 301 in the heat exchange main body 31, the smaller the flow rate of the heat exchange medium, and the lower the overall heat exchange capacity of the heat exchange assembly 30; or the fewer the number of blocked heat exchange flow channels 301 in the heat exchange main body 31, the larger the flow rate of the heat exchange medium, and the higher the overall heat exchange capacity of the heat exchange assembly 30.

The current collecting member 322 may refer to a main structure of the current collecting structure 32, and is a component for receiving the heat exchange medium and converging the heat exchange medium. By way of example, the current collecting member 322 may be a current collector, the current collecting cavity 3221 refers to a cavity structure formed on the current collecting member 322, optionally, the current collecting cavity 3221 may be a cavity open toward one side of the heat exchange main body 31, and the communication port 322a may refer to an inlet/outlet for the heat exchange medium to enter and exit the current collecting cavity 3221. The material of the current collecting member 322 may include, but is not limited to, metal materials, plastic materials, or composite materials, where the metal materials may include, but are not limited to, aluminum alloy and copper alloy, the plastic materials may include, but are not limited to, polyethylene or polypropylene, and the composite materials may include, but are not limited to, carbon fiber reinforced composites or graphite-metal composites.

The adapter member 323 may refer to a component for connecting the current collecting member 322 to the heat exchange main body 31. The adapter member 323 may be of an annular structure disposed circumferentially around the first direction X, where one end of the adapter member 323 wraps around the heat exchange main body 31, and the other end thereof wraps around the current collecting member 322. The adapter member 323 may also be of a non-annular structure, as long as it can be connected to the current collecting member 322 and the heat exchange main body 31 simultaneously. In the above technical solution, this is not specifically limited herein. The material of the adapter member 323 may include, but is not limited to, metal materials or plastic materials, where the metal materials may include, but are not limited to, aluminum alloy and copper alloy, and the plastic materials may include, but are not limited to, polyethylene or polypropylene.

"The adapter member 323 is formed on the heat exchange main body 31 and the current collecting member 322 ", which can be understood as that the adapter member 323 may be directly formed on the heat exchange main body 31 and the current collecting member 322, such that the adapter member 323, the heat exchange main body 31, and the current collecting member 322 are tightly combined to form an integral structure. The manner of forming the adapter member 323 on the heat exchange main body 31 and the current collecting member 322 may include, but is not limited to, injection molding, 3D printing, and casting, which are not specifically limited herein. The "material" mentioned hereinafter may be an injection molding liquid, a casting liquid, or a 3D printing material used when the adapter member 323 is formed.

Since the heat exchange main body 31 and the current collecting member 322 are usually preformed electrical components, their sizes or shapes have been fixed. If the heat exchange main body 31 and the current collecting member 322 are directly connected, it is relatively cumbersome to match their sizes, shapes, and surface flatness, and there is also a risk of poor fit, which affects the connection quality. In the above technical solution, the heat exchange main body 31, the blocking member 321, and the current collecting member 322 can be assembled and positioned first, and then, by directly forming the adapter member 323 on the heat exchange main body 31 and the current collecting member 322, the adapter member 323 can be manufactured and formed based on the existing size and shape of the heat exchange main body 31. The adapter member 323 is relatively easy to manufacture, and the adapter member 323 can also better adapt to the existing size, shape and surface flatness of the current collecting member 322 via a forming mold for the adapter member 323, thereby reducing the mounting difficulty between the heat exchange main body 31 and the current collecting member 322. The heat exchange main body 31 is connected to the current collecting member 322 via the adapter member 323, which also easily ensures high connection quality and improves the connection reliability among the heat exchange main body 31, the adapter member 323, and the current collecting member 322.

In the above technical solution, by configuring the heat exchange assembly 30 to include the heat exchange main body 31 and the current collecting structures 32, and each current collecting structure 32 to include the blocking member 321, the current collecting member 322, and the adapter member 323, when the heat exchange main body 31 is connected to the current collecting structure 32, the heat exchange main body 31, the blocking member 321, and the current collecting member 322 can be assembled and positioned first, and then the heat exchange main body 31 and the current collecting member 322 are connected together by forming the adapter member 323 on the heat exchange main body 31 and the current collecting member 322, such that the current collecting member 322 can be not directly connected to the heat exchange main body 31, and the adapter member 323 can be relatively easily adapted to the size, shape or flatness requirements of the heat exchange main body 31 and the current collecting member 322 during formation, thereby reducing the mounting difficulty among the heat exchange main body 31, the current collecting member 322, and the adapter member 323, making the connection among the heat exchange main body 31, the current collecting member 322, and the adapter member 323 tighter and more reliable, reducing the risk of leakage caused by the unreliable connection of the heat exchange assembly 30, improving the overall reliability of the heat exchange assembly 30, and further improving the reliability of the battery device 100.

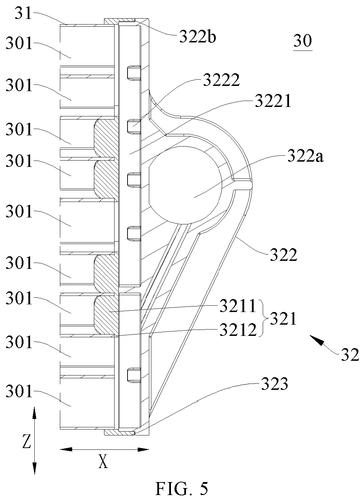

In some embodiments of the present application, referring to FIG. 5 to FIG. 7, at least one of the heat exchange main body 31 and the current collecting member 322 is provided with a recessed portion 322b, and part of the adapter member 323 is formed in the recessed portion 322b.

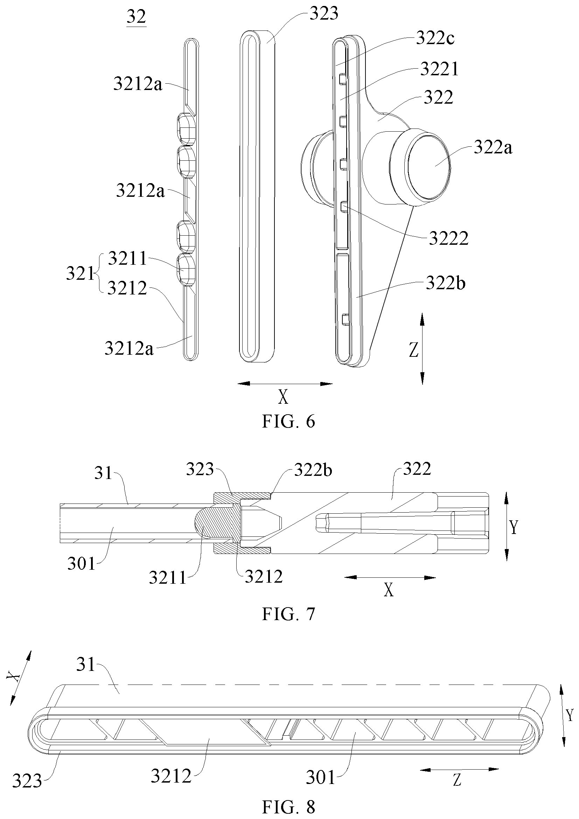

The recessed portion 322b may refer to a recessed region formed on the heat exchange main body 31 and/or the current collecting member 322. The recessed portion 322b may be of a continuous structure, for example, the recessed portion 322b is a strip-shaped groove (see FIG. 6). The recessed portion 322b may also be of a discontinuous structure, and may include a plurality of grooves spaced apart in a third direction Z, where the shape of each groove may include, but is not limited to, a circle and a rectangle.

In the above solution, the recessed portion 322b may be disposed only on the heat exchange main body 31, or may be disposed only on the current collecting member 322. The recessed portion 322b may also be disposed on both the heat exchange main body 31 and the current collecting member 322. By way of example, referring to FIG. 5 to FIG. 7, the recessed portion 322b is disposed on the current collecting member 322.

In the above technical solution, part of the formed adapter member 323 can be embedded in the recessed portion 322b, which can increase the bonding surface between the adapter member 323 and the heat exchange main body 31 and/or the current collecting member 322, thereby making the connection between the adapter member 323 and the heat exchange main body 31 and/or the current collecting member 322 tighter, reducing the risk of loosening of the heat exchange assembly 30 due to factors such as vibration and fluid impact during operation or use, helping to enhance the connection stability and improve the reliable operation of the heat exchange assembly 30, and further improving the reliability of the battery device 100.

In some embodiments of the present application, referring to FIG. 6, the recessed portion 322b is of an annular structure disposed circumferentially around the first direction X.

In the above technical solution, compared with a recessed portion 322b of a non-annular structure, the recessed portion 322b of an annular structure can provide omnidirectional support for the adapter member 323, and can better fix the adapter member 323, thereby reducing the risk of displacement of the adapter member 323 in all directions, and improving the positional reliability of the adapter member 323 on the heat exchange main body 31 and/or the current collecting member 322. With the above structure, the bonding surface between the adapter member 323 and the heat exchange main body 31 and/or the current collecting member 322 can be made as large as possible, which allows for a tighter connection, achieves a better effect in enhancing connection stability, and enables the formed adapter member 323 to be formed into a structure similar to a sealing ring, thereby reducing the risk of leakage, and improving the reliability of the heat exchange assembly 30.

In some embodiments of the present application, referring to FIG. 6, the recessed portion 322b extends and opens in a direction close to the adapter member 323. It can be understood that the recessed portion 322b is a stepped groove formed at the position where the end of the heat exchange main body 31 and/or the current collecting member 322 is located, has a simple structure, and is easy to manufacture.

In the above technical solution, with the above structure, during formation of the adapter member 323, a material for forming the adapter member 323 can smoothly enter the recessed portion 322b along an open position of the recessed portion 322b, which helps to reduce the forming difficulty of the adapter member 323 and improve the forming quality. With the above structure, after the adapter member 323 is formed, the thickness at the transition position between a portion of the adapter member 323 located between the heat exchange main body 31 and the current collecting member 322 and a portion thereof located in the recessed portion 322b can be made relatively large, which can improve the overall strength of the adapter member 323, thereby facilitating the improvement of the connection reliability among the heat exchange main body 31, the current collecting member 322, and the adapter member 323.

In some embodiments of the present application, referring to FIG. 5 and FIG. 7, the thickness of a portion of the adapter member 323 located in the recessed portion 322b is equal to the depth of the recessed portion 322b.

When the recessed portion 322b is disposed on the heat exchange main body 31, the surface of the adapter member 323 is flush with the surface of the heat exchange main body 31. When the recessed portion 322b is disposed on the current collecting member 322, the surface of the adapter member 323 is flush with the surface of the current collecting member 322. When the recessed portion 322b is disposed on both the heat exchange main body 31 and the current collecting member 322, the surface of the adapter member 323 is flush with both the surface of the heat exchange main body 31 and the surface of the current collecting member 322.

In the above technical solution, the surface of the adapter member 323 can be flush with the surface of the heat exchange main body 31 and/or the current collecting member 322 provided with the recessed portion 322b, which helps to make the connection between the adapter member 323 and the heat exchange main body 31 tighter without a gap, and/or the connection between the adapter member 323 and the current collecting member 322 tighter without a gap. Such tight connection helps to improve the sealing performance of the heat exchange assembly 30 and reduce the risk of leakage at the connection position. With the above structure, the heat exchange assembly 30 can have a neater appearance without significant protrusions, which can save materials and the internal space of the case 10, thereby facilitating the mounting of other electrical components inside the case 10.

In some embodiments of the present application, referring to FIG. 5 and FIG. 6, the end of the current collecting member 322 close to the heat exchange main body 31 is open and forms an opening 322c in communication with the current collecting cavity 3221, a supporting portion 3222 is disposed in the opening 322c, and the supporting portion 3222 is connected to at least two opposite ends of the opening 322c.

The supporting portion 3222 may refer to a component or a structure that provides support, for example, the supporting portion 3222 may refer to a supporting rib or a supporting block. "The supporting portion 3222 is connected to at least two opposite ends of the opening 322c", which can be understood as that the supporting portion 3222 may be connected to the cavity walls of the current collecting cavity 3221 located at two ends in the second direction Y, may be connected to the cavity walls of the current collecting cavity 3221 located at two ends in the third direction Z, or may be connected to both the cavity walls of the current collecting cavity 3221 located at two ends in the second direction Y and the cavity walls of the current collecting cavity 3221 located at two ends in the third direction Z, with no specific limitation herein.

In the above technical solution, the opening 322c formed by adopting the above structure has a relatively large size, such that the heat exchange medium flows more smoothly between the current collecting cavity 3221 and the plurality of heat exchange flow channels 301, thereby helping to improve the heat exchange efficiency. During formation of the adapter member 323 on the current collecting member 322, the supporting portion 3222 can support the current collecting member 322 within the opening 322c, which reduces the risk of deformation of the current collecting member 322 caused by the material for forming the adapter member 323 pressing against the current collecting member 322, improves the reliability of the current collecting member 322, and further improves the reliability of the heat exchange assembly 30.

In some embodiments of the present application, referring to FIG. 6, the size of the current collecting member 322 in the second direction Y is smaller than the size of the current collecting member 322 in the third direction Z, the third direction Z, the second direction Y, and the first direction X are perpendicular to one another, and the supporting portion 3222 is connected to two ends of the opening 322c in the second direction Y.

In the above technical solution, the current collecting member 322 is of an elongated structure, and the second direction Y may refer to the width direction of the opening 322c, such that the supporting portion 3222 supports two ends of the current collecting cavity 3221 in the width direction. In this solution, the supporting portion 3222 has a relatively small size and relatively high strength, which can provide greater support strength for the current collecting member 322 and help to further improve the reliability of the current collecting member 322. The supporting portion 3222 with a relatively small size can also reduce the resistance to the heat exchange medium, which helps the heat exchange medium to flow more smoothly between the current collecting cavity 3221 and the heat exchange flow channel 301, improves the heat exchange stability of the heat exchange assembly 30, and further improves the reliability of the battery device 100.

In some embodiments of the present application, referring to FIG. 5 to FIG. 7, the blocking member 321 includes a blocking portion 3211 and a limiting portion 3212 that are connected, where the blocking portion 3211 is disposed in the heat exchange flow channel 301, and the limiting portion 3212 and the end of the heat exchange main body 31 close to the current collecting member 322 abut against each other.

The blocking portion 3211 may refer to a main structure of the blocking member 321 and match in shape the heat exchange flow channel 301. The number of blocking portions 3211 may be one or more. A plurality of blocking portions 3211 may block adjacent heat exchange flow channels 301, or may block non-adjacent heat exchange flow channels 301. By way of example, referring to FIG. 6, there may be four blocking portions 3211 sequentially arranged in the third direction Z, where first and second blocking portions 3211 may block adjacent heat exchange flow channels 301, third and fourth blocking portions 3211 may also block adjacent heat exchange flow channels 301, and the second and third blocking portions 3211 block non-adjacent heat exchange flow channels 301.

The limiting portion 3212 may refer to a structure that protrudes relative to the blocking portion 3211 and serves a limiting function. For example, the limiting portion 3212 may be, but is not limited to, a limiting stop edge, a limiting protrusion, a limiting plate, or the like.

In the above technical solution, after the blocking portion 3211 is mounted in the heat exchange flow channel 301, the limiting portion 3212 can be in abutting fit with the end of the heat exchange main body 31 close to the current collecting member 322 to fix the position of the blocking portion 3211 in the heat exchange flow channel 301, thereby reducing the risk that the blocking portion 3211 continues to displace toward the heat exchange flow channel 301 under the action of the material for forming the adapter member 323 during formation of the adapter member 323 on the heat exchange main body 31, improving the reliability of the blocking portion 3211 in the heat exchange flow channel 301, and further improving the reliability of the heat exchange assembly 30.

In some embodiments of the present application, referring to FIG. 6, the limiting portion 3212 matches in shape the end of the heat exchange main body 31 close to the current collecting member 322, and the position of the limiting portion 3212 corresponding to the heat exchange flow channel 301 is provided with a clearance hole 3212a.

For ease of understanding, by way of example, the limiting portion 3212 may be a limiting retaining ring, and is in abutting fit with the circumferential shell wall of the heat exchange main body 31. The clearance hole 3212a may enable the heat exchange flow channel 301 that does not need to be blocked to be normally in communication with the current collecting cavity 3221. The number of clearance holes 3212a may be equal to that of heat exchange flow channels 301 that do not need to be blocked, with a one-to-one correspondence, and the shape of the clearance holes 3212a may match that of the heat exchange flow channels 301. The number of clearance holes 3212a may also be less than that of heat exchange flow channels 301 that do not need to be blocked, for example, one clearance hole 3212a may correspond to a plurality of heat exchange flow channels 301.

In the above technical solution, the limiting portion 3212 matches in shape the end of the current collecting member 322, which facilitates accurate alignment therebetween during mounting, reduces the risk of mounting errors in the mounting process, lowers the assembly difficulty, and improves the assembly efficiency. With the above structure, the limiting portion 3212 can also fit tightly with the current collecting member 322, thereby reducing the risk of displacement of the blocking portion 3211 under the action of vibration, fluid impact, or other external forces, and improving the reliability of the heat exchange assembly 30. With the above solution, the limiting portion 3212 can also be formed into an annular structure, which can form an annular seal in the circumferential direction between the heat exchange main body 31 and the adapter member 323, thereby reducing the risk of a gap between the heat exchange main body 31 and the adapter member 323. Thus, the sealing performance can be improved, and the reliability of the heat exchange assembly 30 can also be improved.

In some embodiments of the present application, referring to FIG. 8 to FIG. 10, the limiting portion 3212 is configured as a limiting plate, and on a reference plane perpendicular to the first direction X, an orthographic projection of an edge contour 3212b of the limiting portion 3212 on the reference plane is located within an orthographic projection of a flow channel wall 3011 of the heat exchange flow channel 301 provided with the blocking portion 3211.

The limiting plate may be a flat plate-like component.

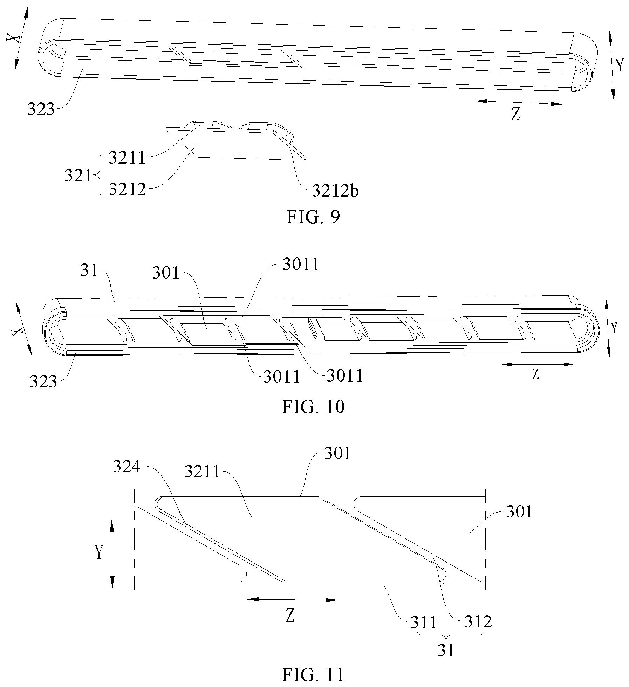

"The edge contour 3212b of the limiting portion 3212" may refer to an annular contour line of the limiting portion 3212 disposed around the first direction X (see FIG. 9).

"The flow channel wall 3011 of the heat exchange flow channel 301" may refer to a wall plate forming the heat exchange flow channel 301. By way of example, referring to FIG. 10, each heat exchange flow channel 301 may include flow channel walls 3011 located at two ends in the second direction Y and flow channel walls 3011 located at two ends in the third direction Z.

"An orthographic projection of an edge contour 3212b of the limiting portion 3212 on the reference plane is located within an orthographic projection of a flow channel wall 3011 of the heat exchange flow channel 301 provided with the blocking portion 3211", which can be understood as that the edge contour 3212b of the limiting portion 3212 does not extend beyond the outermost edge of the flow channel wall 3011 of the heat exchange flow channel 301 to be blocked, such that the heat exchange flow channel 301 that does not need to be blocked is not obstructed, thereby helping to keep the limiting portion 3212 small in size.

In the above solution, there may be a plurality of blocking portions 3211, and the plurality of blocking portions 3211 may block adjacent heat exchange flow channels 301 or non-adjacent heat exchange flow channels 301, which is not specifically limited herein. By way of example, referring to FIG. 8 to FIG. 10, there are two blocking portions 3211, which block two adjacent heat exchange flow channels 301 and are connected to the same limiting plate, and the edge contour of the peripheral side of the limiting plate is located within the contours of the flow channel walls 3011 of the two heat exchange flow channels 301 to be blocked.

In the above technical solution, the limiting portion 3212 is a plate member with a relatively small size, which can reduce material consumption and costs while providing a good limiting effect. In addition, since the limiting portion 3212 has a relatively small size, the entire blocking member 321 is also convenient to manufacture, which can reduce manufacturing costs. With the above solution, the weight can also be reduced, thereby reducing the overall weight of the heat exchange assembly 30, and helping to increase the energy density of the battery device 100.

In some embodiments of the present application, referring to FIG. 11, the blocking member 321 includes a blocking portion 3211, where the blocking portion 3211 is disposed in the heat exchange flow channel 301, a gap 324 is formed between at least one side of the blocking portion 3211 in the first direction X and the inner wall of the heat exchange flow channel 301, and the gap 324 is configured to accommodate flash during formation of the adapter member 323.

"A gap 324 is formed between at least one side of the blocking portion 3211 in the first direction X and the inner wall of the heat exchange flow channel 301", which can be understood as that a gap 324 may be formed between one or two ends of the blocking portion 3211 in the second direction Y and the inner wall of the heat exchange flow channel 301, or a gap 324 may also be formed between one or two ends of the blocking portion 3211 in the third direction Z and the inner wall of the heat exchange flow channel 301.

"The gap 324 is configured to accommodate flash during formation of the adapter member 323", which can be understood as that when the adapter member 323 is formed on the heat exchange main body 31 and the current collecting member 322 by means of injection molding or casting, the material for forming the adapter member 323 is an injection molding liquid or a casting liquid, both of which are liquids. during formation of the adapter member 323, the liquid material is prone to flash issues due to its fluidity. With the above solution, the gap 324 can serve to accommodate part of the flash, thereby reducing the risk of the material for forming the adapter member 323 overflowing onto the surface of the heat exchange main body 31.

In the above technical solution, the gap 324 is configured to accommodate the flash during formation of the adapter member 323, such that during formation of the adapter member 323, the probability that the uneven surface of the heat exchange main body 31 results in a poor fit with the battery cells 21 and consequently affects the heat exchange efficiency can be reduced, the probability that the heat exchange main body 31 is damaged due to excessive local stress induced by the uneven surface can also be reduced, and the reliability of the heat exchange assembly 30 can be improved. The gap 324 is formed between the blocking portion 3211 and the inner wall of the heat exchange flow channel 301, such that the blocking portion 3211 can be more easily mounted in the heat exchange flow channel 301, thereby reducing the mounting difficulty. On this basis, during formation of the adapter member 323 on the heat exchange main body 31, the material for forming the adapter member 323 can enter the gap 324 and provide a seal between the blocking portion 3211 and the heat exchange flow channel 301, thereby improving the blocking effect of the blocking portion 3211 on the heat exchange flow channel 301, helping to keep the heat exchange performance of the heat exchange assembly 30 stable, and improving the reliability of the heat exchange assembly 30.

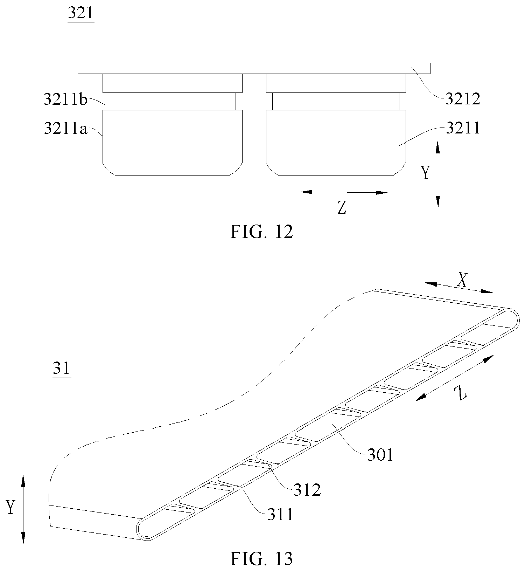

In some embodiments of the present application, referring to FIG. 11 and FIG. 13, the size of the heat exchange main body 31 in the second direction Y is smaller than the size of the current collecting member 322 in the third direction Z, the third direction Z, the second direction Y, and the first direction X are perpendicular to one another, two ends of the blocking portion 3211 in the second direction Y abut against the inner wall of the heat exchange flow channel 301, and the gap 324 is formed between at least one end of the blocking portion 3211 in the third direction Z and the inner wall of the heat exchange flow channel 301.

For the heat exchange main body 31 adopting the above structure, on a section plane perpendicular to the first direction X, the cross section of the heat exchange main body 31 may be rectangular, for example, the cross section of the heat exchange main body 31 may be elongated (see FIG. 11 and FIG. 13). With the above structure, the heat exchange main body 31 may be a thin plate-like structural member, and has a relatively small size, which can save space. When the heat exchange assembly 30 exchanges heat with the battery cell assembly 20, the end face of the heat exchange main body 31 in the second direction Y may fit tightly against the surfaces of the battery cells 21 for heat exchange, thereby saving the internal space of the case 10, and allowing the arrangement of the battery cell assembly 20 with a larger size, or facilitating the arrangement of other electrical components.

Referring to the above, the end face of the heat exchange main body 31 in the second direction Y usually fits tightly against the battery cells 21 for heat exchange, and the large-area surfaces of the battery cells 21 usually fit against the heat exchange main body 31. Part of the heat exchange main body 31 is also disposed between two adjacent battery cells 21, such that the end face of the heat exchange main body 31 in the second direction Y is subjected to a larger force. Through a transition fit or an interference fit between the two ends of the blocking portion 3211 in the second direction Y and the inner wall of the heat exchange flow channel 301, the blocking portion 3211 can provide support in the heat exchange flow channel 301, thereby reducing the probability of large deformation of the heat exchange main body 31.

The two ends of the blocking portion 3211 in the second direction Y may be in transition fit or interference fit with the inner wall of the heat exchange flow channel 301, such that the blocking member 321 can be more firmly mounted in the heat exchange flow channel 301.

"The gap 324 is formed between at least one end of the blocking portion 3211 in the third direction Z and the inner wall of the heat exchange flow channel 301", which can be understood as that the gap 324 is formed between one end of the blocking portion 3211 in the third direction Z and the inner wall of the heat exchange flow channel 301, or the gap 324 is formed between two ends of the blocking portion 3211 in the third direction Z and the inner wall of the heat exchange flow channel 301.

In the above technical solution, the heat exchange main body 31 may be formed into a thin plate-like structure, making it easier to fit against the surface of the battery cell assembly 20 for heat exchange. This helps to save the internal space of the case 10, provides a larger arrangement space for the battery cell assembly 20, and increases the energy density of the battery device 100. It also provides a larger arrangement space for other electrical components, which facilitates the mounting of the electrical components inside the case 10, reduces the mounting difficulty, and is beneficial to maintenance and inspection. With the above structure, on the premise that the gap 324 is formed between the blocking portion 3211 and the inner wall of the heat exchange flow channel 301, the blocking portion 3211 can provide support in a large-area region of the heat exchange main body 31 to achieve a better supporting effect. When the heat exchange main body 31 is subjected to a force, the probability of large deformation of the heat exchange main body 31 is reduced, and the risk of damage to the heat exchange main body 31 is lowered, thereby lowering the risk of deteriorated heat exchange efficiency resulting from the reduced cross section of the heat exchange flow channel 301, improving the heat exchange reliability of the heat exchange main body 31, providing a more stable working environment for the battery cell assembly 20, and further improving the reliability of the battery device 100.

In some embodiments of the present application, referring to FIG. 12, the blocking portion 3211 has a circumferential surface 3211a disposed around the first direction X, the circumferential surface 3211a is provided with an accommodating groove 3211b, and the accommodating groove 3211b is in communication with the gap 324 and is configured to accommodate the flash during formation of the adapter member 323.

The circumferential surface 3211a may refer to a peripheral surface of the blocking portion 3211 disposed around the first direction X.

The accommodating groove 3211b may refer to a recessed region disposed at the position where the circumferential surface 3211a of the blocking portion 3211 is located.

In the above technical solution, the accommodating groove 3211b is in communication with the gap 324 and may be further configured to accommodate the flash during formation of the adapter member 323, and the accommodating groove 3211b and the gap 324 can jointly accommodate more flash, which can further reduce the probability that the flash overflows onto the surface of the heat exchange main body 31 and/or the current collecting member 322 when the adapter member 323 is formed, and further reduce the probability that the surface of the heat exchange main body 31 and/or the current collecting member 322 has poor flatness, thereby further improving the heat exchange effect of the heat exchange assembly 30 on the battery cell assembly 20, and improving the reliability of the battery device 100.

In some embodiments of the present application, the accommodating groove 3211b is of an annular structure disposed circumferentially around the first direction X.

In the above technical solution, during formation of the adapter member 323 on the heat exchange main body 31, the flash can enter the accommodating groove 3211b through the gap 324. Since the accommodating groove 3211b is of the annular structure, the flash can form a seal between the circumferential surface 3211a of the blocking portion 3211 and the inner wall of the heat exchange flow channel 301, which can improve the blocking and sealing effects of the blocking portion 3211 on the heat exchange flow channel 301 on the one hand, and can reduce the problem that the adapter member 323 cannot be well formed due to the flash entering the heat exchange flow channel 301 where the blocking portion 3211 is located on the other hand, thereby improving the forming reliability of the adapter member 323, and further improving the reliability of the heat exchange assembly 30 and the reliability of the battery device 100.

In some embodiments of the present application, referring to FIG. 11 and FIG. 13, the heat exchange main body 31 includes a shell 311 and a plurality of partition plates 312, where two ends of the shell 311 in the first direction X are open, the size of the shell 311 in the second direction Y is smaller than that of the shell 311 in the third direction Z, the third direction Z, the second direction Y, and the first direction X are perpendicular to one another, the plurality of partition plates 312 are disposed in the shell 311, the partition plates 312 are disposed obliquely relative to the second direction Y, and the heat exchange flow channels 301 are respectively formed between the partition plate 312 and the shell wall of the shell 311 and between any two adjacent partition plates 312.

The partition plates 312 may be thin plate members for partitioning the interior of the shell 311. Optionally, in the first direction X, the size of the partition plate 312 may be equal to that of the shell 311, and two ends of the partition plate 312 in the second direction Y may be connected to the inner wall of the heat exchange flow channel 301.

"The size of the shell 311 in the second direction Y is smaller than that of the shell 311 in the third direction Z", such that the cross section of the shell 311 perpendicular to the first direction X is in a rectangular shape. Optionally, the rectangular shape may be configured as an elongated shape, which enables the shell 311 to be formed into a thin shell-like structure, thereby saving space.

"The partition plates 312 are disposed obliquely relative to the second direction Y", which can be understood as that in the shell 311, the partition plates 312 can not only partition the internal space of the shell 311 to form the heat exchange flow channels 301, but also serve as diagonal ribs, thereby improving the overall structural strength and rigidity of the heat exchange main body 31.

The heat exchange main body 31 composed of the shell 311 and the plurality of partition plates 312 may be formed into a "harmonica tube" structure, and is simple in structure and easy to manufacture. The shell 311 and the plurality of partition plates 312 may be integrally formed or separately disposed, which is not specifically limited herein.

In the above technical solution, by configuring the heat exchange main body 31 to include the shell 311 and the partition plates 312, the heat exchange main body 31 as a whole may be formed into a thin shell-like structure, and has a relatively small size while providing a relatively good heat exchange effect, which can save the internal space of the case 10. The partition plates 312 can also form diagonal ribs inside the shell 311, which can improve the overall strength of the heat exchange main body 31, reduce the risk of large deformation of the shell 311, improve the reliability of the heat exchange main body 31, and further improve the reliability of the battery device 100.

In some embodiments of the present application, on the section plane perpendicular to the first direction X, the cross-sectional shape of the heat exchange flow channel 301 is the same as that of the blocking member 321.

In the above technical solution, the cross-sectional shapes of the heat exchange flow channel 301 and the blocking member 321 are the same, such that the blocking member 321 can fit well against the inner wall of the heat exchange flow channel 301, which is beneficial to the sealing of the blocking member 321 in the heat exchange flow channel 301, can reduce the risk of a gap and make the blocking member 321 uniformly bear the pressure in all directions in the heat exchange flow channel 301, and helps to maintain the seal between the blocking member 321 and the inner wall of the heat exchange flow channel 301. Since the cross-sectional shapes of the heat exchange flow channel 301 and the blocking member 321 are the same, the blocking member 321 can also provide support inside the heat exchange flow channel 301, which reduces the risk of large deformation of the heat exchange main body 31 due to stress, is beneficial to reducing the risk of a reduced flow cross-section of the heat exchange flow channel 301, and can improve the heat exchange reliability of the heat exchange main body 31.

In some embodiments of the present application, the adapter member 323 is injection-molded onto the heat exchange main body 31 and the current collecting member 322.

It can be understood that the adapter member 323 can be formed on the heat exchange main body 31 by means of injection molding. The injection molding referred to herein may be, but is not limited to, overmolding. Specifically, the blocking member 321 is first mounted in the heat exchange flow channel 301 that needs to be blocked, and the current collecting member 322 and the heat exchange main body 31 are then assembled and positioned. A mold required for injection-molding the adapter member 323 is disposed on the outer side of the current collecting member 322 and the heat exchange main body 31. The adapter member 323 can be obtained by injecting the injection molding liquid into the mold followed by cooling, such that the adapter member 323 formed in this way is more tightly connected to the current collecting member 322 and the heat exchange main body 31, and is firmer and difficult to disengage.

In the above technical solution, the adapter member 323 is injection-molded onto the heat exchange main body 31 and the current collecting member 322, such that the adapter member 323 can be formed at a relatively high speed and is suitable for large-scale automated production, thereby improving the production efficiency. In this way, the adapter member 323 can also have high size accuracy and high surface quality, which can improve the forming quality of the adapter member 323, improve the connection reliability among the heat exchange main body 31, the adapter member 323, and the current collecting member 322, and further improve the reliability of the battery device 100.

In some embodiments of the present application, the heat exchange main body 31 is a metallic member or a non-metallic member; and/or the current collecting member 322 is a metallic member or a non-metallic member.

It can be understood that the heat exchange main body 31 may be a metallic member or a non-metallic member; and the current collecting member 322 may be a metallic member or a non-metallic member. The metallic member may include, but is not limited to, copper, copper alloy, aluminum alloy, and the like. The non-metal material may include, but is not limited to, plastic, ceramic, and the like. The heat exchange main body 31 and the current collecting member 322 may be made of the same material or different materials.

It should be noted that, especially when the heat exchange main body 31 and the current collecting member 322 are made of different materials, for example, the heat exchange main body 31 is made of a metal material, and the current collecting member 322 is made of a non-metal material. Alternatively, when the heat exchange main body 31 is made of a non-metal material and the current collecting member 322 is made of a metal material, the adapter member 323 is overmolded onto the heat exchange main body 31 and the current collecting member 322, which is beneficial to the connection between the heat exchange main body 31 and the current collecting member 322 made of different materials, can reduce the mounting difficulty between the heat exchange main body 31 and the current collecting member 322, and can improve the connection reliability between the heat exchange main body 31 and the current collecting member 322.

In this technical solution, the heat exchange main body 31 may be a metallic member with better thermal conductivity, which helps to improve the heat exchange efficiency; and the heat exchange main body 31 may also be a non-metallic member, thereby reducing costs while meeting the thermal conductivity requirements. If the current collecting member 322 is a metallic member, it has high rigidity and strength, thereby reducing the risk of damage; and if the current collecting member 322 is a non-metallic member, it can reduce costs while meeting the rigidity and strength requirements. By forming the heat exchange main body 31 and the current collecting member 322 from the above materials, more options are available, providing greater flexibility.

Embodiments of the present application provide an electric device 1000, including the battery device 100 according to any one of the foregoing embodiments, where the battery device 100 is configured to store or supply electric energy.

In the above technical solution, since the battery device 100 has relatively high reliability, the use of the battery device 100 to store or supply electric energy can improve the power supply reliability and further improve the operational reliability of the electric device 1000.

### Embodiment 1

Referring to FIG. 3 to FIG. 7, a battery device 100 according to the embodiments of the present application includes a case 10, a battery cell assembly 20, and a heat exchange assembly 30.

The battery cell assembly 20 is accommodated in the case 10.

The heat exchange assembly 30 is accommodated in the case 10 to exchange heat with the battery cell assembly 20, and the heat exchange assembly 30 includes a heat exchange main body 31 and current collecting structures 32.

The heat exchange main body 31 is a harmonica tube cold plate and includes a plurality of heat exchange flow channels 301 extending in a first direction X. A plurality of diagonal ribs are disposed inside the harmonica tube cold plate. The heat exchange flow channels 301 are formed between any two adjacent diagonal ribs and between the diagonal rib and the inner wall of the harmonica tube cold plate.

The current collecting structures 32 are disposed at two ends of the heat exchange main body 31 in the first direction X, and each current collecting structure 32 includes a blocking member 321, a current collecting member 322, and an adapter member 323.

The blocking member 321 includes a blocking portion 3211 and a limiting portion 3212 that are connected. The limiting portion 3212 matches in shape the end of the heat exchange main body 31 close to the current collecting member 322 and abuts against the end of the heat exchange main body 31 close to the current collecting member 322. The position of the limiting portion 3212 corresponding to the heat exchange flow channel 301 that does not need to be blocked is provided with a clearance hole 3212a. There are a plurality of blocking portions 3211 disposed in the corresponding heat exchange flow channels 301.

The current collecting member 322 is provided with a current collecting cavity 3221. The current collecting member 322 is in sealing fit with and connected to the heat exchange main body 31 by means of the adapter member 323, such that the current collecting cavity 3221 is in communication with the heat exchange flow channel 301. The current collecting member 322 is provided with a communication port 322a in communication with the current collecting cavity 3221. The communication port 322a is configured to allow entry/exit of a heat exchange medium, such that the heat exchange medium flows between the current collecting cavity 3221 and the heat exchange flow channel 301.

The adapter member 323 is of an annular structure disposed around the first direction X, and is injection-molded onto the heat exchange main body 31 and the current collecting member 322. The current collecting member 322 is provided with a recessed portion 322b disposed circumferentially around the first direction X. The recessed portion 322b extends and opens in a direction close to the adapter member 323. Part of the adapter member 323 is formed in the recessed portion 322b.

### Embodiment 2

Referring to FIG. 3, FIG. 4, and FIG. 8 to FIG. 10, the structure of the battery device 100 in Embodiment 2 is substantially the same as that of the battery device 100 in Embodiment 1, with the difference that:

The limiting portion 3212 is configured as a limiting plate, two blocking portions 3211 are provided and block two adjacent heat exchange flow channels 301, and the two blocking portions 3211 are disposed on the same limiting portion 3212. On a reference plane perpendicular to the first direction X, an orthographic projection of an edge contour 3212b of the limiting portion 3212 on the reference plane is located within the orthographic projections of the flow channel walls 3011 of the two heat exchange flow channels 301 provided with the blocking portions 3211.

It should be noted that, without contradictory, the embodiments in the present application may be combined with the features in the embodiments. The above are only preferred embodiments of the present application and are not intended to limit the present application. For those skilled in the art, unless otherwise specified, all embodiments and optional embodiments of the present application may be combined with each other to form new technical solutions. Unless otherwise specified, all technical features and optional technical features of the present application may be combined with each other to form new technical solutions. Any modification, equivalent replacement, or improvement made without departing from the spirit and principle of the present application shall fall within the protection scope of the present application.

## Claims

1. A battery device, comprising:
a case;
a battery cell assembly accommodated in the case; and
a heat exchange assembly accommodated in the case to exchange heat with the battery cell assembly, wherein the heat exchange assembly comprises:
a heat exchange main body comprising a plurality of heat exchange flow channels extending in a first direction; and
current collecting structures disposed at two ends of the heat exchange main body in the first direction, wherein each of the current collecting structures comprises a blocking member, a current collecting member, and an adapter member, the blocking member blocks at least one of the heat exchange flow channels, the current collecting member is provided with a current collecting cavity, the current collecting member is in sealing fit with and connected to the heat exchange main body by means of the adapter member such that the current collecting cavity is in communication with the heat exchange flow channel, the current collecting member is provided with a communication port in communication with the current collecting cavity, the communication port is configured to allow entry/exit of a heat exchange medium such that the heat exchange medium flows between the current collecting cavity and the heat exchange flow channel, and the adapter member is formed on the heat exchange main body and the current collecting member.

2. The battery device according to claim 1, wherein at least one of the heat exchange main body and the current collecting member is provided with a recessed portion, and part of the adapter member is formed in the recessed portion.

3. The battery device according to claim 2, wherein the recessed portion is of an annular structure disposed circumferentially around the first direction.

4. The battery device according to claim 3, wherein the recessed portion extends and opens in a direction close to the adapter member.

5. The battery device according to claim 4, wherein a thickness of a portion of the adapter member located in the recessed portion is equal to a depth of the recessed portion.

6. The battery device according to any one of claims 1 to 5, wherein an end of the current collecting member close to the heat exchange main body is open and forms an opening in communication with the current collecting cavity, a supporting portion is disposed in the opening, and the supporting portion is connected to at least two opposite ends of the opening.

7. The battery device according to claim 6, wherein a size of the current collecting member in a second direction is smaller than a size of the current collecting member in a third direction, the third direction, the second direction, and the first direction are perpendicular to one another, and the supporting portion is connected to two ends of the opening in the second direction.

8. The battery device according to any one of claims 1 to 7, wherein the blocking member comprises a blocking portion and a limiting portion that are connected, the blocking portion is disposed in the heat exchange flow channel, and the limiting portion and an end of the heat exchange main body close to the current collecting member abut against each other.

9. The battery device according to claim 8, wherein the limiting portion matches in shape the end of the heat exchange main body close to the current collecting member, and a position of the limiting portion corresponding to the heat exchange flow channel is provided with a clearance hole.

10. The battery device according to claim 8, wherein the limiting portion is configured as a limiting plate, and on a reference plane perpendicular to the first direction, an orthographic projection of an edge contour of the limiting portion on the reference plane is located within an orthographic projection of a flow channel wall of the heat exchange flow channel provided with the blocking portion.

11. The battery device according to any one of claims 1 to 10, wherein the blocking member comprises the blocking portion, the blocking portion is disposed in the heat exchange flow channel, a gap is formed between at least one side of the blocking portion in the first direction and an inner wall of the heat exchange flow channel, and the gap is configured to accommodate flash during formation of the adapter member.

12. The battery device according to claim 11, wherein a size of the heat exchange main body in the second direction is smaller than the size of the current collecting member in the third direction, the third direction, the second direction, and the first direction are perpendicular to one another, two ends of the blocking portion in the second direction abut against the inner wall of the heat exchange flow channel, and the gap is formed between at least one end of the blocking portion in the third direction and the inner wall of the heat exchange flow channel.

13. The battery device according to claim 11 or 12, wherein the blocking portion has a circumferential surface disposed around the first direction, the circumferential surface is provided with an accommodating groove, and the accommodating groove is in communication with the gap and is configured to accommodate the flash during formation of the adapter member.

14. The battery device according to claim 13, wherein the accommodating groove is of an annular structure disposed circumferentially around the first direction.

15. The battery device according to any one of claims 1 to 14, wherein the heat exchange main body comprises a shell and a plurality of partition plates, two ends of the shell in the first direction are open, a size of the shell in the second direction is smaller than a size of the shell in the third direction, the third direction, the second direction, and the first direction are perpendicular to one another, the plurality of partition plates are disposed in the shell, the partition plates are disposed obliquely relative to the second direction, and the heat exchange flow channels are respectively formed between each of the partition plates and a shell wall of the shell and between any two adjacent ones of the partition plates.

16. The battery device according to claim 15, wherein on a section plane perpendicular to the first direction, a cross-sectional shape of the heat exchange flow channel is the same as that of the blocking member.

17. The battery device according to any one of claims 1 to 16, wherein the adapter member is injection-molded onto the heat exchange main body and the current collecting member.

18. The battery device according to any one of claims 1 to 17, wherein the heat exchange main body is a metallic member or a non-metallic member; and/or the current collecting member is a metallic member or a non-metallic member.

19. An electric device, comprising the battery device according to any one of claims 1 to 18, wherein the battery device is configured to store or supply electric energy.
